# EUROPEAN PATENT APPLICATION

(11) **EP 3 130 266 A1**
(43) Date of publication of application: **15.02.2017**
(21) Application number: 16183576.4
(22) Date of filing: 10.08.2016
(51) Int. Cl.: A47J 43/08, A47J 44/00, A47J 19/02

(54) **JUICER**

(30) Priority: 12.08.2015 TW 104126244
(71) Applicant: Lin, Wei-Chih, New Taipei City 235 (TW); Chang, Ya-Chun, New Taipei City 242 (TW); Lien, Chin-Jui, Taichung City 438 (TW); Wong, Lee Keong, 47410 Petaling Jaya Selangor (MY)
(72) Inventor: Lin, Tzu-Nung, 220 New Taipei City (TW)
(74) Representative: Banse & Steglich

(57) **Abstract**

A juicer comprises a base (2). A motor (3) electrically connected to a controller disposed inside the base. The controller controls an axis of the motor to turn clockwise or anti-clockwise. The axis of the motor has a first end (33) and a second end (34) in an opposite direction to the first end. The first end of the axis is axially connected with a first unidirectional bearing (5) coupled with a first connecting element (4) coaxially. The second end of the axis is axially connected with a second unidirectional bearing (7) coupled with a second connecting element (6) coaxially. The second connecting element is moved together with a third connecting element. Thereby, the axis of the motor turns in clockwise or anti-clockwise direction for selectively enabling the first connecting element to move upwardly together with a first cutter inside a first container and to turn the first cutter for cutting.

## Description

### Field of the invention

The present invention relates to a juicer and more particularly to a juicer that selectively enables one of two different cutters to turn and perform cutting so that electrical energy can be effectively saved, lifespan of the juicer can be prolonged, and noise produced during usage can be reduced.

### Background of the invention

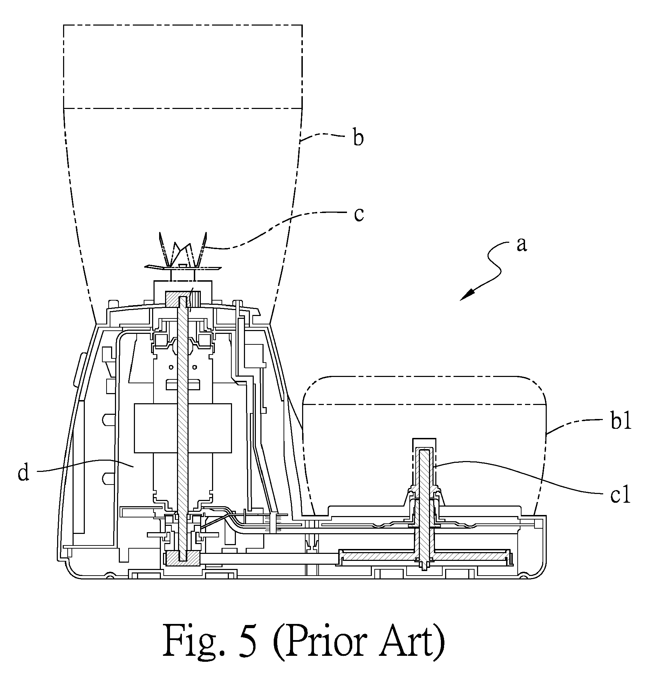

Different types of juicers are available in the market for grinding, cutting and making juice from fruits, vegetables and foods for people to intake nutrients. Please refer to Fig. 5. Fig. 5 shows a conventional juicer with two containers b and b1. Two different cutters c and c1 disposed inside the two containers b and b1 respectively are moved together with a motor d so that the cutters c and c1 can turn at a high speed and a low speed respectively for performing different cutting effects.

However, when users only need to use one of the containers for cutting, the above-mentioned structures do not leave the users many choices. Because the two cutters inside the two containers turn simultaneously, not only that the double loads produced cause waste of torsion and electrical energy, but also that the mechanical parts are worn down more rapidly which increases the probability of breakdown and produces more noise.

### Summary of the invention

In view of the above drawbacks, a juicer of the present invention is provided with structures and techniques different from the conventional ones.

A primary objective of the present invention is to provide a juicer which employs an axis of a motor with two ends connected with a unidirectional bearing respectively, and a controller for controlling the rotational directions of the axis for selectively enabling one of two different cutters to turn and cut. Accordingly, the problems of double loads, rapid wearing down of mechanical parts and production of noise of conventional juicers can be solved. Therefore, electrical energy can be saved, lifespan of the juicer can be prolonged and noise produced during usage can be reduced.

In order to achieve the above-mentioned objectives, a juicer of the present invention comprises a base. A first connecting element and a third connecting element are disposed on the base. A motor is disposed inside the base. An axis of the motor has a first end and a second end in an opposite direction to the first end. The first connecting element is connected with the first end of the axis. The second end of the axis is connected with the second connecting element. The second connecting element is moved together with the third connecting element. The first connecting element is moved upwardly together with a first cutter inside a first container. The third connecting element is moved upwardly together with a second cutter inside a second container. Characterized in that: the motor is electrically connected to a controller for controlling the axis of the motor to turn clockwise or anti-clockwise; the first connecting element is coupled with a first unidirectional bearing coaxially, the first unidirectional bearing is connected with the first end of the axis axially for controlling the first connecting element to turn unidirectionally; and the second connecting element is coupled with a second unidirectional bearing coaxially, the second unidirectional bearing is connected with the second end of the axis axially, when the first unidirectional bearing turns relative to the first connecting element, the second connecting element turns in a direction opposite to the turning direction of the first connecting element.

When the juicer is embodied, the juicer further comprises a first positioning element, a diameter of the first positioning element is bigger than that of the axis of the motor, and the first positioning element is connected on an end face of the first end of the axis.

When the juicer is embodied, a screw hole is disposed in the end face of the first end of the axis, and the first positioning element is locked into the screw hole by using a screw for connecting the first positioning element on the end face of the first end of the axis. The first end of the axis is also disposed with an outer screw thread, and the first positioning element is screwed together with the outer screw thread by using an inner screw hole for connecting the first positioning element on the end face of the first end of the axis.

When the juicer is embodied, the juicer further comprises a second positioning element, a diameter of the second positioning element is bigger than that of the axis of the motor, and the second positioning element is connected on an end face of the second end of the axis.

When the juicer is embodied, a screw hole is disposed in the end face of the second end of the axis, and the second positioning element is locked into the screw hole by using a screw for connecting the second positioning element on the end face of the second end of the axis. The second end of the axis is also disposed with an outer screw thread, and the second positioning element is screwed together with the outer screw thread by using an inner screw hole for connecting the second positioning element on the end face of the second end of the axis.

The present invention will become more fully understood by reference to the following detailed description thereof when read in conjunction with the attached drawings.

### Brief description of drawings

Fig. 1 is an exploded view of a juicer according to a preferred embodiment of the present invention;
Fig. 2 is a sectional schematic view of the juicer according to the preferred embodiment of the present invention;
Figs. 3 and 4 are schematic views showing the use of the juicer according to the preferred embodiment of the present invention.
Fig. 5 is a sectional schematic view of a conventional juicer.

### Detailed Descriptions of Preferred Embodiments

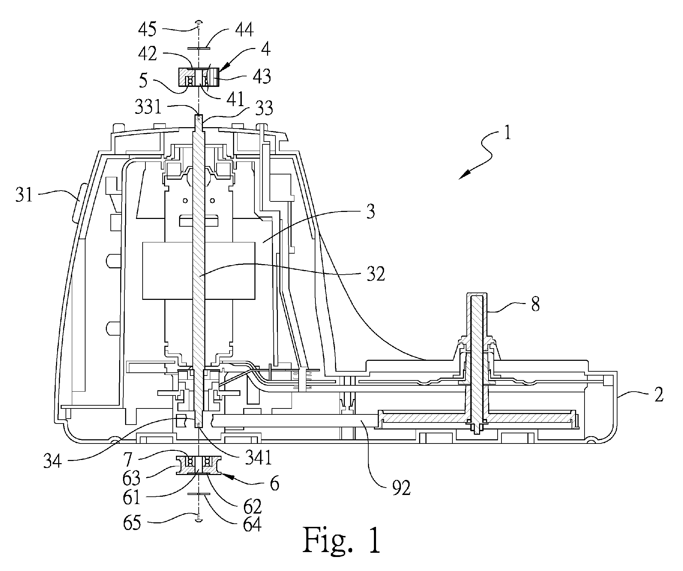

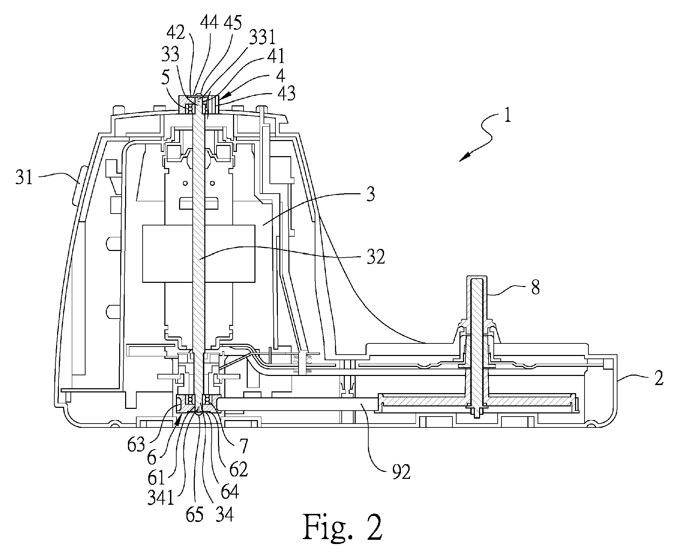

Please refer to Figs. 1 and 2 for a juicer 1 according to a preferred embodiment of the present invention. The juicer 1 comprises a base 2, a motor 3, a first connecting element 4, a first unidirectional bearing 5, a second connecting element 6, a second unidirectional bearing 7 and a third connecting element 8.

The motor 3 is a servomotor vertically positioned inside the base 2. The motor 3 is electrically connected with a controller 31 for controlling an axis 32 of the motor 3 to turn clockwise or anti-clockwise. The axis 32 of the motor 3 has a first end 33 and a second end 34 in an opposite direction to the first end 33. The first end 33 is disposed at a top of the axis 32, and the second end 34 is disposed at a bottom of the axis 32. Screw holes 331 and 341 are disposed at an end face of the first end 33 and the second end 34 respectively.

The first connecting element 4 is a short cylindrical column having a hollow axial hole 41. A groove 42 is concavely formed on a top of the first connecting element 4, and the groove 42 and the axial hole 41 are disposed coaxially. A plurality of vertical tooth 43 is disposed on an outer circumference of the first connecting element 4 for upwardly positioning and moving together with a first cutter 91 inside a first container 9. A thin plate shaped first positioning element 44 with a diameter bigger than that of the axis 32 of the motor 3 is accommodated inside the groove 42 on the top of the first connecting element 4. After a screw 45 is downwardly screwed and locked into the screw hole 331 of the first end 33 of the axis 32, the first positioning element 44 is connected on the end face of the first end 33 of the axis 32 for preventing the first connecting element 4 from detaching axially from the first end 33 of the axis 32. When the juicer 1 is embodied, the first end 33 of the axis 32 is also disposed with an outer screw thread, and the first positioning element 44 has an inner screw hole for screwing together with the outer screw thread for connecting the first positioning element 44 on the end face of the first end 33 of the axis 32. Furthermore, the first connecting element 4 is coupled with the first unidirectional bearing 5 coaxially, and the first unidirectional bearing 5 is connected with the first end 33 of the axis 32 axially. Thereby, the axis 32 turns clockwise or anti-clockwise in order to control the first connecting element 4 to turn unidirectionally.

The second connecting element 6 is a short cylindrical column having a hollow axial hole 61. A groove 62 is concavely formed on a bottom of the second connecting element 6, and the groove 62 and the axial hole 61 are disposed coaxially. A guiding groove 63 is disposed on an outer circumference of the second connecting element 6, and a belt 92 is used for moving together with the third connecting element 8 so that the third connecting element 8 is upwardly moved together with a second cutter 94 inside a second container 93. A thin plate shaped second positioning element 64 with a diameter bigger than that of the axis 32 of the motor 3 is accommodated inside the groove 62 on the bottom of the second connecting element 6. After a screw 65 is upwardly screwed and locked into the screw hole 341 of the second end 34 of the axis 32, the second positioning element 64 is connected on the end face of the second end 34 of the axis 32 for preventing the second connecting element 6 from detaching axially from the second end 34 of the axis 32. When the juicer 1 is embodied, the second end 34 of the axis 32 is also disposed with an outer screw thread, and the second positioning element 64 has an inner screw hole for screwing together with the outer screw thread for connecting the second positioning element 64 on the end face of the second end 34 of the axis 32. Furthermore, the second connecting element 6 is coupled with the second unidirectional bearing 7 coaxially, and the second unidirectional bearing 7 is connected with the second end 34 of the axis 32 axially.

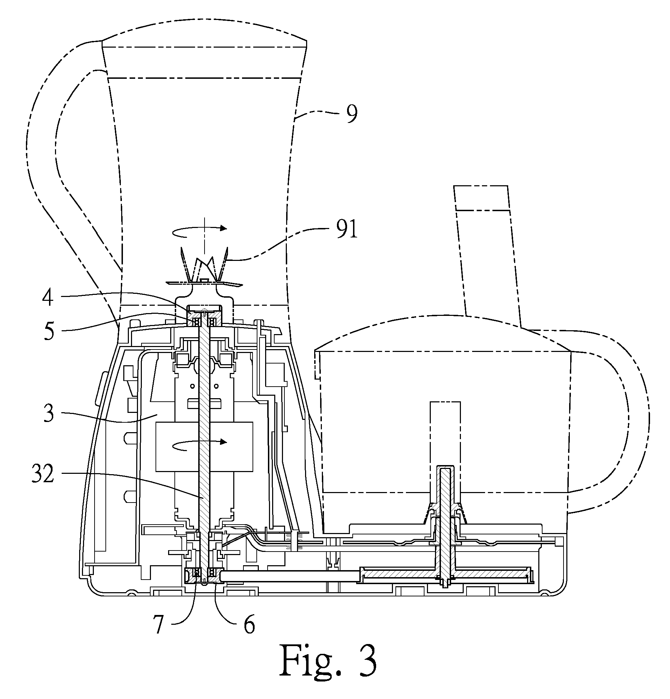

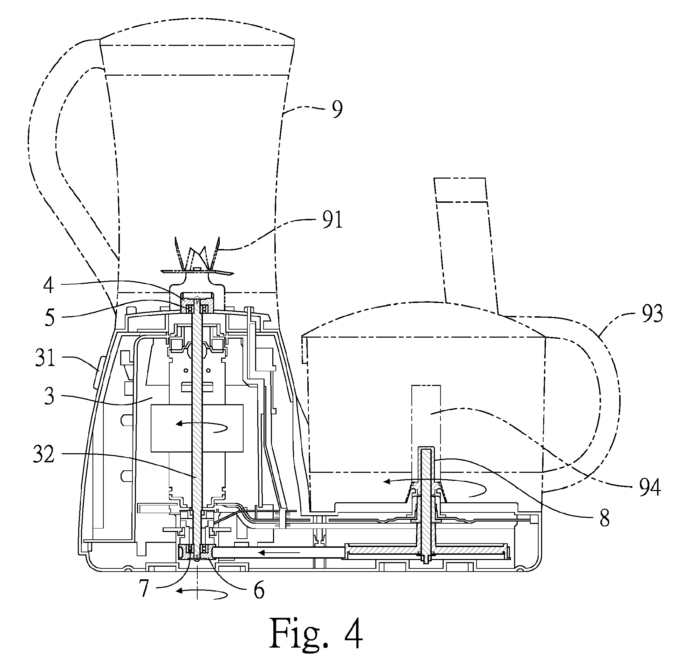

Thereby, as shown in Fig. 3, when a user places foods, fruits and vegetables into the first container 9 and controls the axis 32 of the motor 3 to turn clockwise; the axis 32 moves together with the first unidirectional bearing 5 and the first connecting element 4 to turn clockwise, and simultaneously the first cutter 91 turns to perform cutting. Meanwhile, the second unidirectional bearing 7 idles without making the second connecting element 6 to turn. As shown in Fig. 4, when the user switches the controller 31 to control the axis 32 of the motor 3 to turn anti-clockwise, the first unidirectional bearing 5 idles relative to the first connecting element 4 without making the first connecting element 4 to turn. The axis 32 moves together with the second unidirectional bearing 7 and the second connecting element 6 to turn anti-clockwise. Accordingly, the second connecting element 6 moves together with the third connecting element 8 for making the second cutter 94 to cut the foods, fruits and vegetables inside the second container 93.

Therefore, the juicer of the present invention has the following advantages:
1. The juicer of the present invention can selectively enable one of the two different cutters to perform turning and cutting. Therefore, the double loads can be effectively prevented from producing for saving electrical energy, rapid wearing down of the mechanical parts can be prevented from happening for prolonging lifespan of the juicer, and noise produced can be reduced.
2. The juicer of the present invention employs the first positioning element for connecting on the end face of the first end of the axis, and the second positioning element for connecting on the end face of the second end of the axis. Therefore, when the axis turns clockwise or anti-clockwise, the first connecting element or the second connecting element can be prevented from detaching from the axis outwardly and axially in order to ensure the product quality and safety of usage.

According to the above disclosure, the expected objectives can be achieved by providing the juicer of the present invention that can save electrical energy, prolong the lifespan, reduce the noise, and ensure the product quality and safety of usage.

Although the embodiments of the present invention have been described in detail, many modifications and variations may be made by those skilled in the art from the teachings disclosed hereinabove. Therefore, it should be understood that any modification and variation equivalent to the spirit of the present invention be regarded to fall into the scope defined by the appended claims.

## Claims

1. A juicer comprising a base, a first connecting element and a third connecting element being disposed on the base, a motor being disposed inside the base, an axis of the motor having a first end and a second end pointing in an opposite direction to the first end, the first connecting element being connected with the first end of the axis, the second end of the axis being connected with a second connecting element, the second connecting element being moved together with the third connecting element, the first connecting element being moved upwardly together with a first cutter inside a first container, and the third connecting element being moved upwardly together with a second cutter inside a second container, said juicer **characterized in that**:
the motor is electrically connected with a controller for controlling the axis of the motor to turn clockwise or anti-clockwise;
the first connecting element is coupled with a first unidirectional bearing coaxially, the first unidirectional bearing is connected with the first end of the axis axially for controlling the first connecting element to turn unidirectionally; and
the second connecting element is coupled with a second unidirectional bearing coaxially, the second unidirectional bearing is connected with the second end of the axis axially, when the first unidirectional bearing rotates relative to the first connecting element, through the rotation of the first unidirectional bearing, the second connecting element is rotated in a direction opposite to the rotating direction of the first connecting element.

2. The juicer as claimed in Claim 1, further comprising a first positioning element, a diameter of the first positioning element being bigger than that of the axis of the motor, and the first positioning element being connected on an end face of the first end of the axis.

3. The juicer as claimed in Claim 2, wherein a screw hole is disposed on the end face of the first end of the axis, and the first positioning element is locked into the screw hole by using a screw for connecting the first positioning element on the end face of the first end of the axis.

4. The juicer as claimed in Claim 2, wherein the first end of the axis is disposed with an outer screw thread, and the first positioning element is screwed with the outer screw thread by using an inner screw hole for connecting the first positioning element on the end face of the first end of the axis.

5. The juicer as claimed in Claim 1, further comprising a second positioning element, a diameter of the second positioning element is bigger than that of the axis of the motor, and the second positioning element is connected on an end face of the second end of the axis.

6. The juicer as claimed in Claim 5, wherein a screw hole is disposed on the end face of the second end of the axis, and the second positioning element is locked into the screw hole by using a screw for connecting the second positioning element on the end face of the second end of the axis.

7. The juicer as claimed in Claim 5, wherein the second end of the axis is disposed with an outer screw thread and the second positioning element is screwed with the outer screw thread by using an inner screw hole for connecting the second positioning element on the end face of the second end of the axis.

8. The juicer as claimed in Claim 2, further comprising a second positioning element, a diameter of the second positioning element is bigger than that of the axis of the motor, and the second positioning element is connected on an end face of the second end of the axis.

9. The juicer as claimed in Claim 8, wherein a screw hole is disposed on the end face of the second end of the axis, and the second positioning element is locked into the screw hole by using a screw for connecting the second positioning element on the end face of the second end of the axis.

10. The juicer as claimed in Claim 8, wherein the second end of the axis is disposed with an outer screw thread and the second positioning element is screwed with the outer screw thread by using an inner screw hole for connecting the second positioning element on the end face of the second end of the axis.
